# EUROPÄISCHE PATENTSCHRIFT

(11) **EP 2 364 511 B1**
(45) Veröffentlichungstag und Bekanntmachung des Hinweises auf die Patenterteilung: **01.02.2017**
(21) Anmeldenummer: 09807494.1
(22) Anmeldetag: 04.12.2009
(51) Int. Cl.: H01M 4/58, H01M 4/587, H01M 4/1393, H01M 10/0525, H01M 4/1395

(54) **VERFAHREN ZUR HERSTELLUNG VON ELEKTRODENAKTIVMATERIAL FÜR ELEKTROCHEMISCHE ELEMENTE**
PROCESS FOR PRODUCING AN ELECTRODE MATERIAL FOR ELEKTROCHEMICAL ELEMENTS
PROCEDE DE PRODUCTION DE MATERIEL POUR DES ELEMENTS ELECTROCHIMIQUES

(30) Priorität: 05.12.2008 DE 102008063552
(43) Veröffentlichungstag der Anmeldung: 14.09.2011
(73) Patentinhaber: VARTA Microbattery GmbH, 73479 Ellwangen (DE); VW-VM Forschungsgesellschaft mbH & Co. KG, 73479 Ellwangen Jagst (DE)
(72) Erfinder: KOLLER, Stefan, A-8010 Graz (AT); PICHLER, Stefan, A-8162 Passail (AT); FUCHSBICHLER, Bernd, A-8605 Karpfenberg (AT); UHLIG, Frank, 8051 Graz (AT); WURM, Calin, 86405 Meitingen (DE); WÖHRLE, Thomas, 70469 Stuttgart (DE); WINTER, Martin, 48149 Münster (DE)
(74) Vertreter: Patentanwaltskanzlei Cartagena
(86) Internationale Anmeldenummer: PCT/EP2009/008673
(87) Internationale Veröffentlichungsnummer: WO 2010/063480

(56) Entgegenhaltungen:
- EP-A2- 1 045 465
- WO-A1-2007/095013
- WO-A2-2004/049473
- WO-A2-2009/112714
- DE-A1-102011 008 815
- JP-A- 2002 255 529
- JP-A- 2004 182 512
- JP-A- 2013 026 029
- US-A- 5 278 005
- US-A1- 2002 009 646
- US-A1- 2006 035 149
- US-A1- 2008 145 757
- US-A1- 2009 169 725
- US-B2- 6 589 696
- US-B2- 6 733 922
- BARANCHUGOV ET AL: "Amorphous silicon thin films as a high capacity anodes for Li-ion batteries in ionic liquid electrolytes" ELECTROCHEMISTRY COMMUNICATION, ELSEVIER, AMSTERDAM, NL, Bd. 9, Nr. 4, 1. April 2007 (2007-04-01), Seiten 796-800, XP022015834 ISSN: 1388-2481

## Beschreibung

Die vorliegende Erfindung betrifft ein Verfahren zur Herstellung eines Aktivmaterials für elektrochemisches Elemente.

Wiederaufladbare Lithiumbatterien, in denen metallisches Lithium als negatives Elektrodenmaterial verwendet wird, weisen bekanntlich eine sehr hohe Energiedichte auf. Allerdings ist es auch bekannt, dass bei der Zyklisierung (Laden und Entladen) von solchen Batterien eine ganze Reihe von Problemen auftreten können. So führen unvermeidbare Nebenreaktionen von metallischem Lithium mit der Elektrolytlösung zu einer Belegung der Lithiumoberfläche mit Zersetzungsprodukten, die die Prozesse der Lithiumabscheidung und -auflösung beeinflussen können. In extremen Fällen kann es auch zur Bildung von Dendriten kommen, durch die unter Umständen der Elektrodenseparator beschädigt werden kann. Struktur und Zusammensetzung der durch die Nebenreaktionen gebildeten Oberflächenschicht auf dem metallischen Lithium, die oft auch als solid electrolyte interface (SEI) bezeichnet wird, hängen in der Regel wesentlich vom Lösungsmittel und vom Leitsalz ab. Aus der Bildung eines solchen SEI resultiert in der Regel immer eine Erhöhung des inneren Widerstandes der Batterie, wodurch Ladungs- und Entladungsvorgänge stark behindert werden können.

Aus diesem Grund ist man bereits seit längerem auf der Suche nach Aktivmaterialien insbesondere für die negativen Elektroden galvanischer Elemente, bei denen die genannten Probleme nicht auftreten, die jedoch die Konstruktion von Batterien mit akzeptablen Energiedichten erlauben. Die negativen Elektroden aktuell erhältlicher Lithium-Ionen-Batterien weisen häufig eine negative Elektrode auf Basis von Graphit auf. Graphit ist in der Lage, Lithium-Ionen zu interkalieren und auch zu desorbieren. Die Bildung von Dendriten wird dabei in der Regel nicht beobachtet. Al-lerdings ist die Fähigkeit von Graphit zur Aufnahme von Lithium-Ionen beschränkt. Die Energiedichte von Batterien mit solchen Elektroden ist deshalb relativ beschränkt.

Ein Material, das vergleichsweise große Mengen an Lithium-Ionen interkalieren kann, ist metallisches Silizium. Unter Bildung der Li₂₂Si₅-Phase kann theoretisch eine Menge an Lithium-Ionen aufgenommen werden, die die vergleichbare Menge bei einer Graphitelektrode um mehr als das Zehnfache überschreitet. Problematisch ist jedoch dabei, dass die Aufnahme einer solch großen Menge an Lithium-Ionen mit einer außerordentlich hohen Volumenänderung einhergehen kann (bis zu 300 %), die sich wiederum sehr negativ auf die mechanische Integrität von Elektroden mit Silizium als Aktivmaterial auswirken kann.

Um diesem Problem Herr zu werden, wurde in der Vergangenheit der Ansatz verfolgt, möglichst kleine Siliziumpartikel als Aktivmaterial einzusetzen (insbesondere Partikel mit einer mittleren Partikelgröße deutlich unter 1 µm, also Nanopartikel). Bei derart kleinen Partikeln sind die absolut auftretenden Volumenänderungen relativ klein, so dass die Partikel dabei nicht zerbrechen.

Allerdings wurde festgestellt, dass die bei der Lithiierung von Silizium gebildeten intermetallischen Phasen ein ähnlich stark reduzierendes Potenzial aufweisen wie metallisches Lithium selbst. Deshalb kommt es auch hier zur Bildung eines SEI. Da die spezifische Oberfläche eines Aktivmaterials, das große Mengen an Nanopartikeln enthält, sehr groß ist, wird bei der Bildung des SEI eine entsprechend große Menge an Elektrolyt und Lithium verbraucht. Dadurch bedingt muss wiederum die positive Elektrode grundsätzlich überdimensioniert werden, was in der Folge die Energiedichte einer entsprechenden Lithium-Ionen-Zelle beträchtlich senkt und den Vorteil der hohen Energiedichte der negativen Elektrode zumindest teilweise kompensiert.

Aus der WO 2009/112714 A2 ist es bekannt zwecks Herstellung eines Elektrodenaktivmaterials eine Siliziumschicht auf Partikeln aus Kohlenstoff abzuscheiden. Die Abscheidung erfolgt mittels eines Cyclovoltametrieverfahrens aus einer Lösung, in der als Silizium-Precursor eine halogenhaltige Siliziumverbindung wie Siliziumtetrachlorid enthalten ist. Dieser Precursor wird auf der Oberfläche der Kohlenstoffpartikel elektrochemisch reduziert. Anschließend wird das enthaltene Aktivmaterial bei Raumtemperatur getrocknet.

Aus der US 2008/0145757 A1 ist ein Elektrodenaktivmaterial bekannt, das neben einem porösen Kohlenstoffmaterial auch feine metallische Partikel enthält, insbesondere Siliziumpartikel. Hergestellt wird dieses Elektrodenmaterial durch Mischen von Siliziumpartikeln mit Graphitpartikeln und einem polymeren Precursor, der bei einer thermischen Behandlung zu Kohlenstoff umgewandelt wird.

In der WO 2004/049473 A2 und der US 2006/0035149 A1 wird beschrieben, wie Partikel aus Silizium oder aus einer Siliziumverbindung wie Siliziumcarbid, Siliziumdioxid oder Siliziumnitrid mit Kohlenstoffpartikeln gemischt und mittels eines Klebers miteinander verklebt werden.

Die EP 1 045 465 A2 betrifft ein Aktivmaterial für negative Elektroden, das neben Kohlenstoffpartikeln auch Partikel aus einer Siliziumverbindung wie z.B. Mg₂Si umfasst.

Die US 2002/0009646 A1 offenbart ein Elektrodenaktivmaterial, das Kohlenstoffpartikel aufweist, auf deren Oberfläche kleine Siliziumpartikel abgeschieden sind.

In der DE 10 2005 011 940 A1 wird ein Verfahren beschrieben, gemäß dem beschichtete Kohlenstoffpartikel hergestellt werden können. Dabei werden elektrisch leitfähige Kohlenstoffpartikel in einem Reaktionsraum durch chemische Gasphasenabscheidung aus mindestens einem gasförmigen Silan in einer sauerstofffreien Gasatmosphäre mit elementarem Silizium beschichtet. Die elektrisch leitfähigen Kohlenstoffpartikel sind während der Gasphasenabscheidung ständig in Bewegung. Verwendung können die beschichteten Kohlenstoffpartikel insbesondere als Anodenmaterialien für Lithium-Ionen-Batterien finden.

Der vorliegenden Erfindung lag die Aufgabe zugrunde, ein neues, alternatives Elektrodenaktivmaterial aufzufinden und bereitzustellen, das den Bau von Batterien mit relativ hoher Energiedichte ermöglicht.

Diese Aufgabe wird gelöst durch das Verfahren mit den Merkmalen des Anspruchs 1. Bevorzugte Ausführungsformen des erfindungsgemäßen Verfahrens sind in den Ansprüchen 2 bis 5 angegeben.

Über das erfindungsgemäße Verfahren können Aktivmaterialien erhalten werden, die sich hervorragend für den Einsatz in Elektroden, insbesondere in negativen Elektroden, von elektrochemischen Elementen eignen. Bevorzugte Anwendungsfelder sind vor allem Elektroden für wiederaufladbare Batterien mit Lithium-Ionen- und Lithium-Polymer-Technologie. Unter dem Begriff "Aktivmaterial" soll dabei allgemein ein Material verstanden werden, das in einem elektrochemischen Element unmittelbar in den Prozess der Umwandlung chemischer in elektrische Energie eingreift. Im Falle einer Lithium-Ionen-Batterie können beispielsweise Lithium-Ionen in das Aktivmaterial einer negativen Elektrode unter Aufnahme von Elektronen eingelagert und unter Abgabe von Elektronen wieder desorbiert werden.

Das erfindungsgemäße Verfahren umfasst zumindest drei Schritte, nämlich
(1) das Bereitstellen von Kohlenstoffpartikeln,
(2) das Aufbringen eines Silizium-Precursors auf die Oberfläche der Kohlenstoffpartikel und
(3) das thermische Zersetzen des Silizium-Precursors unter Bildung von metallischem Silizium.

Bei dem so erhältlichen Aktivmaterial handelt es sich also um ein Kompositmaterial auf Basis von Kohlenstoffpartikeln, auf deren Oberfläche metallisches Silizium abgeschieden wurde.

Bei den Kohlenstoffpartikeln kann es sich insbesondere um Graphitpartikel, um CNTs (Kohlenstoff-Nanoröhrchen) oder um Mischungen aus beiden handeln. Bei der Wahl der Graphitpartikel ist man grundsätzlich nicht beschränkt, so können grundsätzlich alle Graphitpartikel zum Einsatz kommen, die auch in aus dem Stand der Technik bekannten Graphitelektroden verwendet werden können. Bei CNTs handelt es sich bekanntlich um mikroskopisch kleine röhrenförmige Gebilde aus Kohlenstoff, in die ebenfalls Lithium-Ionen eingelagert werden können. Zur Verwendung als Aktivmaterialien geeignete CNTs sind beispielsweise in der WO 2007/095013 A1 beschrieben.

Unter dem Begriff Silizium-Precursor ist im Rahmen der vorliegenden Anmeldung grundsätzlich jede Substanz bzw. jede chemische Verbindung zu verstehen, die insbesondere durch Erwärmung zersetzt werden kann, wobei metallisches Silizium abgeschieden wird. Derartige Substanzen und Verbindungen sind dem Fachmann grundsätzlich bekannt. Grundsätzlich ist denkbar, den Precursor aus der Gasphase auf den Kohlenstoffpartikeln abzuscheiden. Besonders bevorzugt wird jedoch ein flüssiger oder in einer Flüssigkeit enthaltener Silizium-Precursor auf die Oberfläche der Kohlenstoffpartikel aufgebracht, gefolgt von der erwähnten thermischen Zersetzung. Der Silizium-Precursor kann in der Flüssigkeit sowohl gelöst als auch diespergiert sein.

Das Aufbringen des Silizium-Precursors auf die Oberfläche der Kohlenstoffpartikel kann grundsätzlich auf verschiedene Arten erfolgen. Welche Vorgehensweise hier am günstigsten ist, hängt grundsätzlich von der Beschaffenheit des Precursors ab, auf die später noch detaillierter eingegangen wird. Im einfachsten Fall können die bereitgestellten Kohlenstoffpartikel beispielsweise in eine Lösung eingebracht werden, in der der Silizium-Precursor enthalten ist. Dieser kann sich dann auf der Oberfläche der Kohlenstoffpartikel absetzen. Gegebenenfalls vorhandenes Lösungsmittel sollte vor dem anschließenden thermischen Zersetzen entfernt werden.

Als Precursor werden insbesondere oligomere bzw. polymere Silane eingesetzt, die sich durch die allgemeine Formel -[SiH₂]ₙ- mit n > 10 beschreiben lassen, also eine Mindestkettenlänge von mindestens 10 Siliziumatomen aufweisen.

Derartige Silane liegen inder der Regel flüssig vor oder lassen sich in Lösung verarbeiten. Es müssen also keine gasförmigen Precursoren verwendet werden, der entsprechende apparative Aufwand fällt entsprechend relativ gering aus.

Ein als Silizium-Precursor besonders geeignetes Silangemisch lässt sich beispielsweise durch Oligomerisation oder Polymerisation ausgehend von zyklischen Silanen erhalten. Erfindungsgemäß wird als Silizium-Precursor ein Silan-Gemisch verwendet, das durch Oligomerisation und/oder Polymerisation ausgehend von Cyclopentasilan hergestellt wurde. Die Oligomerisation bzw. die Polymerisation kann dabei insbesondere photoinduziert erfolgt. Durch Bestrahlung wird eine Ringöffnung induziert, wobei sich mehr oder weniger lange Ketten bilden können. Die Bildung der Ketten selbst verläuft dabei wie bei jeder Polymerisation nicht einheitlich, es resultiert also ein Gemisch aus Oligo- bzw. Polysilanen unterschiedlicher Kettenlängen. Das mittlere Molekulargewicht M_{W} eines erfindungsgemäß besonders bevorzugten Silangemischs liegt bevorzugt insbesondere zwischen 500 und 5.000.

Das Zersetzen des Silizium-Precursors erfolgt in aller Regel durch eine Wärmebehandlung, insbesondere bei einer Temperatur > 300 °C. Bei einer derartigen Temperatur zerfallen oligomere und polymere Silane gewöhnlich unter Abspaltung von Wasserstoff. Es erfolgt eine mindestens teilweise Umwandlung in metallisches Silizium, insbesondere in amorphes metallisches Silizium. Besonders bevorzugt werden Temperaturen zwischen 300 °C und 1.200 °C gewählt. Aus energetischen Gründen wird üblicherweise angestrebt, die Umwandlung bei möglichst niedrigen Temperaturen durchzuführen. Insbesondere Temperaturen zwischen 300 °C und 600 °C sind deshalb bevorzugt. Bei solchen Temperaturen kann eine im wesentlichen vollständige Umwandlung des Oligobzw. Polysilans erfolgen.

Erfindungsgemäß geeignete Silane bzw. Silangemische sowie geeignete Bedingungen zur Zersetzung solcher Silane und Silangemische sind im Übrigen auch in der wissenschaftlichen Veröffentlichung "Solutionprocessed silicon films and transistors" von Shimoda et al. (NATURE Vol. 440, April 06, 2006, Seiten 783 bis 786) angegeben. Insbesondere auf die entsprechenden experimentellen Ausführungen in dieser Veröffentlichung wird hiermit vollumfänglich Bezug genommen.

Dasnach einem erfindungsgemäßen Verfahren herstellbare Aktivmaterial umfasst Kohlenstoffpartikel, deren Oberfläche mindestens teilweise mit einer Schicht aus Silizium, insbesondere einer Schicht aus amorphem Silizium, mindestens teilweise bedeckt ist. Besonders bevorzugt besteht das erfindungsgemäße Aktivmaterial aus solchen Partikeln.

In bevorzugten Ausführungsformen kann die Schicht aus Silizium auf der Oberfläche der Kohlenstoffpartikel eine im Wesentlichen geschlossene Hülle ausbilden. Die Kompositpartikel aus Kohlenstoff und Silizium weisen in diesem Fall einen Kern auf (gebildet durch den Kohlenstoffpartikel) und eine darum angeordnete Hülle aus Silizium.

Bei Kontakt mit Wasser oder Luftfeuchtigkeit, beispielsweise bei der Herstellung einer Elektrodenpaste (siehe Ausführungsbeispiel) kann die Schicht aus Silizium oberflächlich oxidieren. Die entstehende Schicht aus Siliziumoxid hat in der Regel eine passivierende Wirkung, sie wirkt einer Oxidation tiefer liegender Siliziumschichten entgegen. Es resultieren Partikel mit einem Kern aus Kohlenstoff, einer mittleren Schicht aus insbesondere amorphem Silizium und einer äußeren Schicht aus Siliziumoxid.

Die Bedingungen bei der Zersetzung des Silizium-Precursors können so gewählt werden, dass in der entstehenden Schicht oder Hülle aus Silizium gegebenenfalls noch eine geringe Menge Wasserstoff enthalten ist. In aller Regel ist dieser jedoch in einem Anteil von unter 5 Gew.-% (bezogen auf das Gesamtgewicht der Schicht bzw. Hülle) enthalten, vorzugsweise in einem Anteil zwischen 0,001 Gew.-% und 5 Gew.-%, insbesondere in einem Anteil zwischen 0,01 und 3 Gew.-%.

Die Kohlenstoffpartikel weisen bevorzugt eine mittlere Partikelgröße zwischen 1 µm und 200 µm, insbesondere zwischen 1 µm und 100 µm, insbesondere zwischen 10 µm und 30 µm, auf.

Die Hülle aus Silizium ist üblicherweise nicht dicker als 15 µm. Damit ergibt sich, dass die Gesamtgröße der Partikel (mittlere Partikelgröße) in bevorzugten Ausführungsformen 215 µm, insbesondere 115 µm, nicht überschreitet. Besonders bevorzugt liegt sie zwischen 10 µm und 100 µm, insbesondere zwischen 15 µm und 50 µm.

Es ist bevorzugt, dass das Aktivmaterial im Wesentlichen frei von Teilchen mit Partikelgrößen im nanoskaligen Bereich ist. Insbesondere enthält das Aktivmaterial bevorzugt keine Kohlenstoff-Silizium-Teilchen mit Größen < 1 µm.

Das Gewichtsverhältnis von Kohlenstoff zu Silizium liegt bei dem Aktivmaterial vorzugsweise im Bereich zwischen 1:10 und 10:1. Besonders bevorzugt sind hier Werte im Bereich zwischen 1:1 und 3:1.

Mitit dem Aktivmaterial lassen sich Elektroden herstellen, die eine bis zu drei mal höhere Lithium-Ionen-Speicherfähigkeit aufweisen als Vergleichselektroden mit klassischem Aktivmaterial aus Graphit. Das gemäß dem erfindungsgemäßen Verfahren hergestellte Aktivmaterial zeigte bei Zyklisierungstests eine ähnliche Zyklenstabilität wie das eingangs erwähnte nanopartikuläre Silizium, ohne jedoch die beschriebenen Nachteile aufzuweisen.

Bei einer unter Verwendung des gemäß dem erfindungsgemäßen Verfahren hergestellten Aktivmaterials hergestellten Elektrode ist das Aktivmaterial üblicherweise in eine Bindermatrix eingebunden. Geeignete Materialien für eine solche Bindermatrix sind dem Fachmann bekannt. Es können beispielsweise Copolymere aus PVDF-HFP (Polyvinylidendifluorid-Hexafluorpropylen) zum Einsatz kommen.

Das Aktivmaterial ist in der Elektrode üblicherweise in einem Anteil von mindestens 85 Gew.-% enthalten. Weitere Anteile entfallen auf den bereits erwähnten Binder sowie gegebenenfalls auf einen oder mehrere Leitfähigkeitszusätze (z. B. Ruß).

Weitere Merkmale und auch Vorteile der vorliegenden Erfindung ergeben sich aus der nachfolgenden Beschreibung der Zeichnungen sowie dem Ausführungsbeispiel in Verbindung mit den Unteransprüchen. Die einzelnen Merkmale können dabei jeweils für sich oder zu mehreren in Kombination miteinander bei einer Ausführungsform der Erfindung verwirklicht sein. Die Zeichnungen und das Ausführungsbeispiel dienen lediglich zur Erläuterung und zum besseren Verständnis der Erfindung und sind in keiner Weise einschränkend zu verstehen.

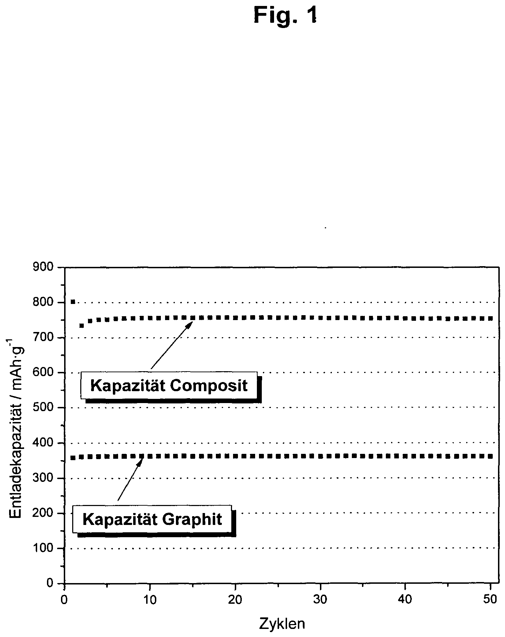

In den Zeichnungen zeigen
- Fig. 1: einen Vergleich der Zyklenstabilität einer unter Verwendung des gemäß dem erfindungsgemäßen Verfahren hergestellten Aktivmaterials hergestellten Elektrode mit Silizium-Kohlenstoff-Kompositpartikeln mit einer vergleichbaren Elektrode mit Graphit als Aktivmaterial in Abhängigkeit der Ladebzw. Entladezyklen.

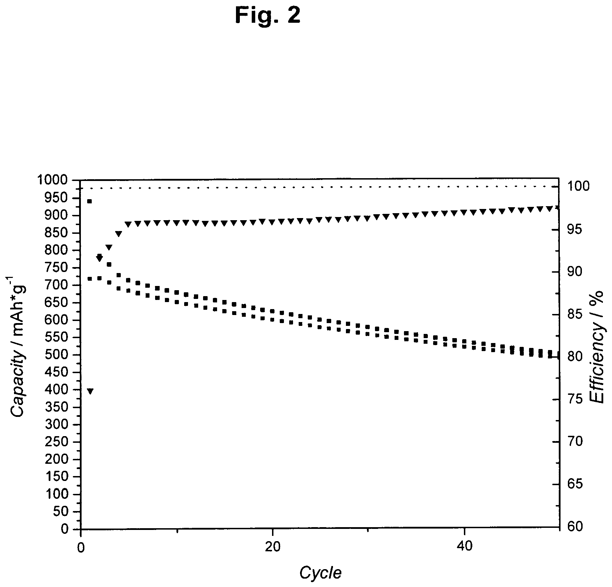

- Fig. 2: einen Vergleich der Zyklenstabilität einer unter Verwendung des gemäß dem erfindungsgemäßen Verfahren hergestellten Aktivmaterials hergestellten Elektrode mit Silizium-Kohlenstoff-Kompositpartikeln mit einer vergleichbaren aus dem Stand der Technik bereits bekannten Elektrode mit einer Mischung aus Graphit- und Silizium-Nanopartikeln als Aktivmaterial.

### Beispiel

(1) Zur Herstellung einer Ausführungsform des Aktivmaterials wurde Cyclopentasilan unter einer Argonatmosphäre (Wassergehalt und Sauerstoffgehalt < 1 ppm) mittels UV-Licht bei einer Wellenlänge von 405 nm photoinduziert polymerisiert. Es wurde solange polymerisiert, bis die erhaltene Polysilanmischung eine gelartige Konsistenz aufwies. Diese wurde mit Graphitpartikeln mit einer mittleren Partikelgröße von 15 µm vermengt, wobei eine Paste erhalten wurde, die anschließend bei einer Temperatur von 823 K wärmebehandelt wurde. Die Wärmebehandlung wurde so lange durchgeführt, bis keine Wasserstoffentwicklung mehr zu beobachten war. Das so gewonnene Material wurde anschließend in einer Kugelmühle gemahlen und dabei auf eine mittlere Partikelgröße von ca. 20 µm eingestellt.
(2) Zur Herstellung einer bevorzugten Ausführungsform der Elektroden wurden 8 Gew.-% Natriumcarboxymethylzellulose (Walocell^{®} CRT2000PPA12) in Wasser eingetragen und zur vollständigen Quellung gebracht. Des weiteren wurden sequentiell 87 % des gemäß (1) hergestellten Aktivmaterials und 5% Leitruß (Super P) als Leitfähigkeitsverbesserer eingetragen und dispergiert.
   Die so erhaltene Elektrodenpaste wurde auf eine Kupferfolie in der Stärke von 200 µm aufgerakelt.
(3) Zur Herstellung einer Vergleichselektrode wurden 8 Gew.-% Natriumcarboxymethylzellulose (Walocell^{®} CRT2000PPA12) in Wasser eingetragen und zur vollständigen Quellung gebracht. Des weiteren wurden sequentiell 20% nanopartikuläres Silizium (Nanostructured and Amorphous Materials Los Alamos) und 5% Karbon Nanofasern (Electrovac AG, LHT-XT) eingebracht und hochenergetisch dispergiert. 5% Leitruß (Super P) und 62% Graphit (Naturgraphit, potato shaped) werden abschließend eingetragen und dispergiert.
Die so erhaltene Elektrodenpaste wurde auf eine Kupferfolie in der Stärke von 200 µm aufgerakelt.

In Fig. 1 ist ein Vergleich der Zyklenstabilität einer gemäß (2) hergestellten Elektrode mit einer vergleichbaren Elektrode mit Graphit als Aktivmaterial (an Stelle der Silizium-Kohlenstoff-Kompositpartikel) in Abhängigkeit der Lade- bzw. Entladezyklen dargestellt. Klar zu erkennen ist, dass die erfindungsgemäß hergestellte Elektrode eine deutlich höhere Kapazität aufweist.

In Fig. 2 ist ein Vergleich einer gemäß (2) hergestellten Elektrode mit Silizium-Kohlenstoff-Kompositpartikeln mit einer gemäß (3) hergestellten Vergleichselektrode in Abhängigkeit der Lade- bzw. Entladezyklen dargestellt. Bei der erfindungsgemäß hergestellten Elektrode (obere Kurve, Dreiecke) bleibt die Kapazität auch nach über 40 Zyklen im wesentlichen konstant, bei der Vergleichselektrode (untere Kurve, Quadrate) ist dagegen ein deutliches Absinken der Kapazität messbar.

## Patentansprüche

1. Verfahren zur Herstellung von Aktivmaterial für die Elektrode eines elektrochemischen Elements, umfassend die Schritte
- Bereitstellen von Kohlenstoffpartikeln,
- Aufbringen eines Silizium-Precursors auf die Oberfläche der Kohlenstoffpartikel,
- thermisches Zersetzen des Silizium-Precursors unter Bildung von metallischem Silizium,
wobei als Silizium-Precursor ein Silangemisch verwendet wird, das durch Oligomerisation und/oder Polymerisation ausgehend von Cyclopentasilan hergestellt wurde.

2. Verfahren nach Anspruch 1, **dadurch gekennzeichnet, dass** es sich bei den Kohlenstoffpartikeln um Graphitpartikel und/oder um CNTs (Kohlenstoff-Nanoröhrchen) handelt.

3. Verfahren nach Anspruch 1 oder Anspruch 2, **dadurch gekennzeichnet, dass** der Silizium-Precursor flüssig ist oder in einer Flüssigkeit enthalten ist.

4. Verfahren nach einem der vorhergehenden Ansprüche, **dadurch gekennzeichnet, dass** das mittlere Molekulargewicht M_{W} des Silangemischs zwischen 500 und 5000 liegt.

5. Verfahren nach einem der vorhergehenden Ansprüche, **dadurch gekennzeichnet, dass** das Zersetzen des Silizium-Precursors bei einer Temperatur > 300 °C durchgeführt wird.

## Claims

1. Process for producing active material for the electrode of an electrochemical element, comprising the steps of
- providing carbon particles,
- applying a silicon precursor to the surface of the carbon particles,
- thermally decomposing the silicon precursor to form metallic silicon,
wherein the silicon precursor used is a silane mixture which has been prepared by oligomerization and/or polymerization proceeding from cyclopentasilane.

2. Process according to Claim 1, **characterized in that** the carbon particles are graphite particles and/or CNTs (carbon nanotubes).

3. Process according to Claim 1 or Claim 2, **characterized in that** the silicon precursor is in liquid form or is present in a liquid.

4. Process according to any of the preceding claims, **characterized in that** the mean molecular weight M_{W} of the silane mixture is between 500 and 5000.

5. Process according to any of the preceding claims, **characterized in that** the decomposition of the silicon precursor is conducted at a temperature of > 300°C.

## Revendications

1. Procédé pour la préparation de matériau actif pour l'électrode d'un élément électrochimique, comprenant les étapes consistant à
- mettre à disposition des particules de carbone,
- appliquer un précurseur de silicium à la surface des particules de carbone,
- décomposer thermiquement le précurseur de silicium avec formation de silicium métallique,
un mélange de silanes, qui a été préparé par oligomérisation et/ou polymérisation partant de cyclopentasilane, étant utilisé comme précurseur de silicium.

2. Procédé selon la revendication 1, **caractérisé en ce qu'**il s'agit, pour les particules de carbone, de particules de graphite et/ou de NTC (nanotubes de carbone).

3. Procédé selon la revendication 1 ou la revendication 2, **caractérisé en ce que** le précurseur de silicium est liquide ou est contenu dans un liquide.

4. Procédé selon l'une quelconque des revendications précédentes, **caractérisé en ce que** le poids moléculaire moyen M_{W} du mélange de silanes est situé entre 500 et 5000.

5. Procédé selon l'une quelconque des revendications précédentes, **caractérisé en ce que** la décomposition du précurseur de silicium est réalisée à une température > 300°C.
